# EUROPEAN PATENT SPECIFICATION

(11) **EP 2 957 979 B1**
(45) Date of publication and mention of the grant of the patent: **26.09.2018**
(21) Application number: 14461543.2
(22) Date of filing: 20.06.2014
(51) Int. Cl.: G05D 1/10, B64D 5/00

(54) **Method and system for supporting maneuvers of an all-wing carrier aircraft by its parasite flying units**
Verfahren und System zur Unterstützung von Manövern von Nurflügelträgerflugzeugen durch seine Drohnenflugeinheiten
Procédé et système pour supporter des manoeuvres de déplacement d'un transporteur toute voilure par ses unités volantes parasites

(43) Date of publication of application: 23.12.2015
(73) Proprietor: Patents Factory Ltd. Sp. z o.o., 65-043 Zielona Gora (PL)
(72) Inventor: Paczkowski, Jacek, 65-043 Zielona Gora (PL); Nalewa, Tomasz, 65-043 Zielona Gora (PL); Kramek, Krzysztof, 65-043 Zielona Gora (PL)
(74) Representative: Kancelaria Eupatent.pl Sp. z.o.o

(56) References cited:
- WO-A2-2014/011255
- DE-C- 723 665
- DE-U1-202011 052 293
- US-A1- 2009 294 573

## Description

### TECHNICAL FIELD

The object of the invention is a method and a system for supporting maneuvers of an all-wing carrier aircraft by its parasite flying units.

### BACKGROUND

There are known flying units of all-wing type. They usually resemble a single wing of an aircraft that comprises its own propelling means. Such flying units have several advantages, the main of which is a relatively low mass. This, in consequence, results in low fuel or energy consumption and low manufacturing costs when compared to classic flying units. The all-wing type units can be in form of UAVs (Unmanned Aerial Vehicles), which further emphasizes these advantages, and also eliminates the risk of death of the pilot.

The PCT application WO2001058756 discloses an aircraft of "all-wing" type, the flight of which can be controlled by controlling the thrust of its engines. Such steering method can allow for the lower overall mass of the aircraft, as well as less complicated construction.

There is also known a use of all-wing type units as a carrier for other, smaller UAVs with own propelling means. In such instance, these small UAVs are called 'parasites' and are connected for example to the lower surface of the carrier, so that they can be easily detached when necessary. When connected, they do not need to be propelled, as they rely on the carrier for transportation. Steering of a carrier with parasites is not different than steering of a carrier without parasites. It is however less effective and more energy consuming.

There is a need to provide a method and a system for supporting maneuvers of an all-wing carrier aircraft by its parasite flying units that would not overly compromise its low energy or fuel consumption and structural simplicity.

A US patent application US2009294573 discloses a system for reconnaissance using autonomous unmanned airborne vehicles (UAV). The system comprises a mothership, which is generally a fixed wing fuel tank capable of providing a suitable surface for flight (lift) and one or more elements for attachment of individual UAVs. The system further comprises one or more UAVs that are detachably connected to the mothership, and which are independently controllable for reconnaissance and tracking. The UAVs comprise surveillance sensors, such as television cameras and IR systems, which are not capable to cooperate with flight control surfaces of parasites to support the maneuvers of the mothership.

### SUMMARY

There is disclosed a method for supporting maneuvers of an all-wing carrier aircraft by its parasite flying units, comprising the steps of: selecting a maneuver to be performed; determining sensor values corresponding to selected maneuver; selecting engines of parasites to support the maneuver; activating said engines so that sensor values are matched.

Preferably, the sensor values are stress values.

Preferably, activating of engines further comprises adjusting the angular position of the parasite with respect to the carrier.

Preferably, the activating of engines further comprises adjusting of the thrust of said engines.

There is also disclosed a system for supporting maneuvers of an all-wing carrier aircraft by its parasite flying units, the system comprising a controller configured to: select a maneuver to be performed; determine sensor values corresponding to selected maneuver; select engines of parasites to support the maneuver; activate said engines so that sensor values are matched.

### BRIEF DESCRIPTION OF DRAWINGS

Further details and features of the present invention, its nature and various advantages will become more apparent from the following detailed description of the preferred embodiments shown in a drawing, in which:
Fig. 1 shows an all-wing flying unit in perspective view from above.
Fig. 2 shows an all-wing flying unit in perspective view from below.
Fig. 3 shows the same carrier in a view from behind.
Fig. 4 shows the carrier in a side view.
Fig. 5 shows the steps of a method according to the invention.
Fig. 6 shows a system according to the invention.

### DETAILED DESCRIPTION

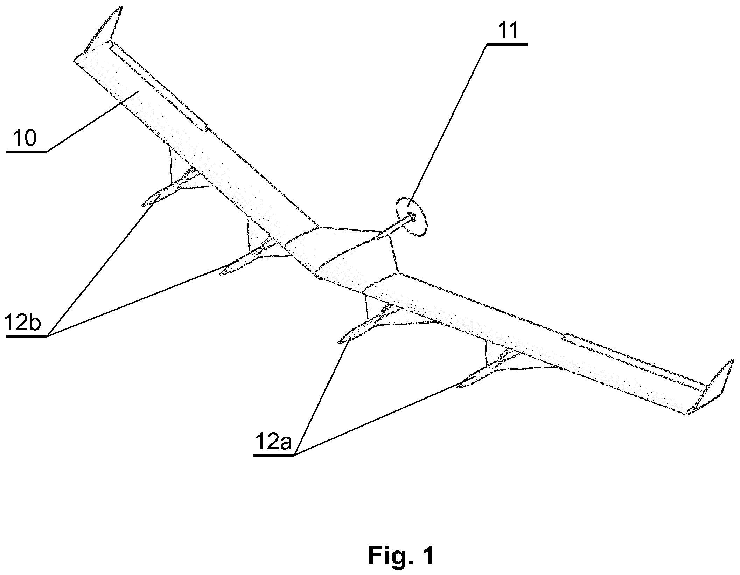

Fig. 1 shows an all-wing flying unit in perspective view from above. The flying unit, i.e. carrier 10, is propelled by a single propeller 11 located in the center. The parasites 12a, 12b (small UAVs) are connected under a wing of the carrier, substantially in a symmetric configuration with respect to its longitudinal axis. In this case, there are two parasites on the left side and two parasites on the right side of the carrier. Other configurations with different number of parasites are also possible.

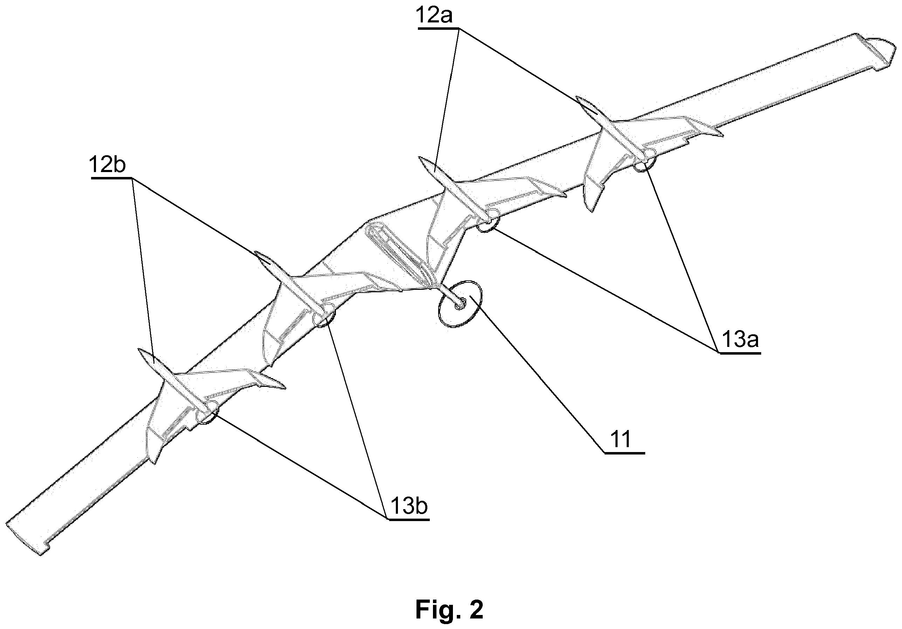

Fig. 2 shows an all-wing flying unit in perspective view from below. Onto the left side of the carrier (looking from behind) there are connected left parasites 12a and onto the right side there are connected right parasites 12b. The parasites 12a, 12b comprise engines 13a, 13b, respectively.

Both the carrier 10 and parasites 12a, 12b are equipped with engines and flight control surfaces. Commonly, only carrier uses its engine and flight control surfaces to effect the maneuvers. However, if the carrier carries parasites, these parasites can be utilized to cause or support a maneuver of the carrier using their engines.

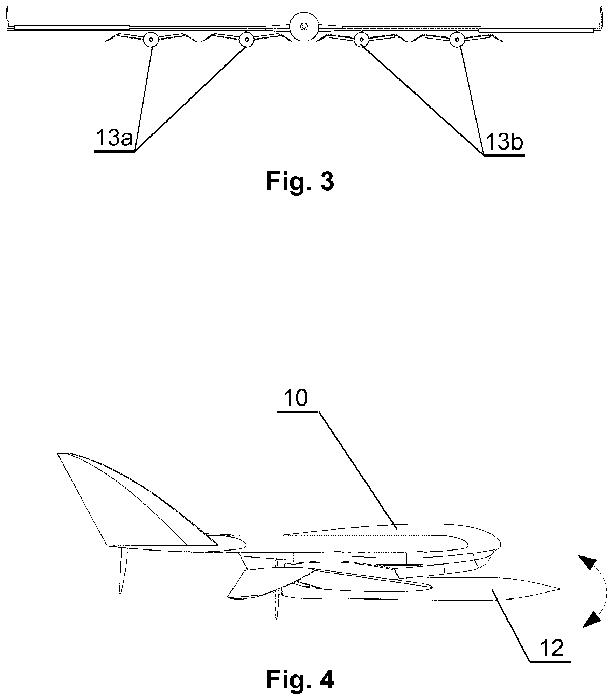

Fig. 3 shows the same carrier in the view from behind. The parasites under one of the wings, e.g. parasites 12b can turn their engines 13b to cause or support a yaw maneuver. It is also possible to turn the engines under the other wing, e.g. parasites 12a can turn their engines 13a as well, but with reverse thrust. As a result, the maneuver will be effected more efficiently.

The parasites are connected to the carrier through electric connections so as to allow the carrier to send control signals to the parasites. They can also be connected wirelessly. The controller 31 in the carrier can actively operate the engines of parasites, their flight control surfaces and their angular position with respect to the carrier.

Fig. 4 shows the carrier in side view. Preferably, the parasites are mounted pivotably to the carrier, so that the angular position of the parasite with respect to said carrier can be regulated. It can be effected for example by suitable servomechanisms. Such pivotable mounting can allow for directing the thrust of a parasite slightly upwards or downwards. This way the functioning of ailerons of the carrier can be supported. Moreover, the mounting of parasite can allow to pivot the parasite horizontally, so that it can support for example horizontal movements of the aircraft.

In case there occurs a positive or negative additional lift force due to the change of angular position of the parasites with respect to the carrier, it can be compensated using flight control surfaces. The controller 31 can observe the sensor values (for example stress values from sensors) and compensate this lift by adjusting the position and/or extension of flight control surfaces if it decides, that such compensation would be advantageous. It can also consider such additional positive or negative lift as intentional.

When the engines of the parasites are supporting the elevator (i.e. during pitch maneuver) some or all of the parasites should be directed simultaneously so as to produces thrust supporting the maneuver. For example, if the pitch maneuver is effected to lower the position of the carrier, the parasites should be pivoted downward using its servomechanisms.

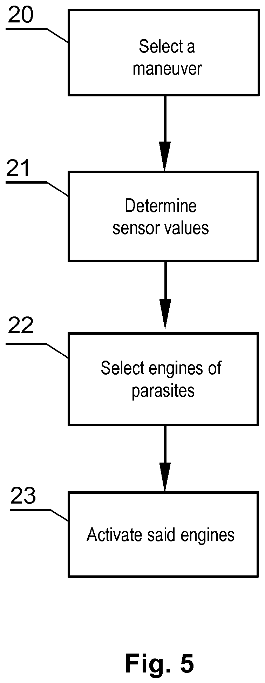

Figure 5 shows the steps of a method according to the invention. First, there is selected (20) a maneuver to be performed. It can be for example a yaw maneuver. Next, there are determined (21) the sensor values 25, for example values representing the stress on the pylon of the wing, that correspond to selected maneuver. They can be measured, predicted, calculated or simulated beforehand and then stored in the memory. The step of determining (21) can, for example, be effected by retrieving these sensor values 25 from memory, where they are associated with given maneuver. Next, the suitable engines of parasites (a single, few or all of the parasites) are selected (22) to support the maneuver of the carrier. Then, said selected engines are activated (23) so that desired sensor values 25 are matched.

The forces (stresses) acting on selected parts of the carrier during effecting of the maneuver can be calculated, knowing the position of the engines and flight control surfaces with respect to the center of mass of the carrier and center of pressure of said carrier. Alternatively, the forces can be measured throughout the whole aircraft (on carrier alone or together with parasites). Therefore, the control of the flight can be carried out by setting a given force to be read by measurement means, for example tensometric sensors, and adjusting the angular position engines and/or thrust of engines and/or degree of extension of flight control surfaces so as to match this value. This can be easily done by building a control loop, wherein the controller (regulator) compares set force (stress) value with measured force (stress) value on given, selected part of the carrier and/or parasite. The output of the controller (regulator) is used to control the thrust of the engine and/or the servomechanism in charge of the engines angular position.

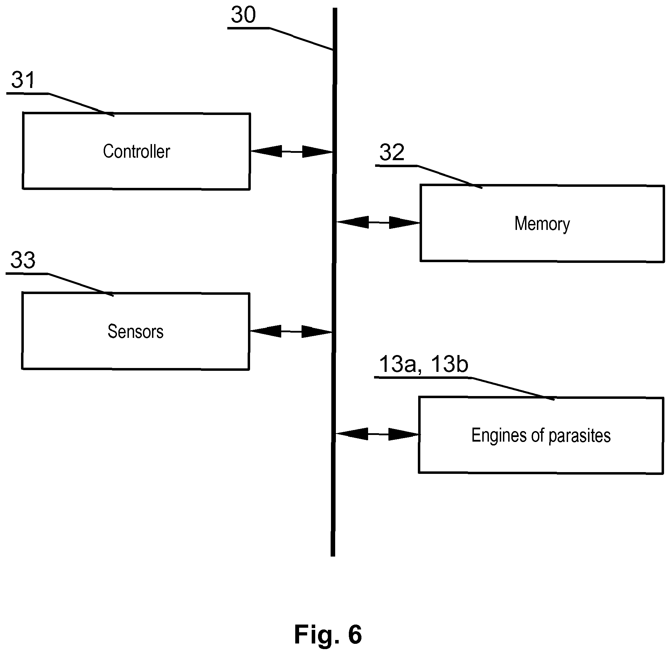

Figure 6 shows a system for supporting maneuvers of an all-wing carrier aircraft by its parasite flying units. The system comprises a controller 31. The controller 31 is configured to execute software that allows supporting maneuvers of an all-wing carrier aircraft by its parasite flying units using steps of the method described above. The system comprises a data bus 30 for communicating, preferably bi-directionally, all circuits and/or elements of the system. Further, the system comprises a memory 32 for storing required software for the controller 31 and any temporary data needed for operation of the system.

The controller 31 is communicatively connected to engines of selected parasite so as to control their angular position and/or thrust based on the information provided from sensors 33.

The controller 31 can use a PID regulator to control engines 13a, 13b of selected parasites based on measurement from sensors 33. An intelligent control implementing fuzzy logic can be utilized as well.

The method according to the invention can be utilized in pilotable manned or unmanned aircraft carriers carrying pilotable manned or unmanned parasite aircrafts. At least until the deployment of the parasites, the pilot of the carrier should have full control over the parasites, as stated above.

The maneuvers could be carried out by the pilot or the system using only common means and techniques known in the art. This however would compromise the simplicity and weight of the carrier, which preferably should be as light and as simple construction-wise as possible after releasing most or all of the parasites.

The above discussion is a simplification and idealization of flying, with the assumption of preferable, moderate flight conditions.

## Claims

1. A method for supporting maneuvers of an all-wing carrier aircraft by its parasite flying units, **characterized in that** it comprises the steps of:
- providing a memory with predetermined sensor values (25) corresponding to maneuvers;
- selecting (20) a maneuver to be performed;
- determining (21) sensor values (25) corresponding to selected maneuver, by retrieving the sensor values (25) from the memory;
- selecting (22) engines of parasites to support the maneuver;
- activating (23) said engines in a control loop so that measured sensor values (25) are matched with the sensor values retrieved from the memory for the selected maneuver.

2. The method according to claim 1, wherein the sensor values (25) are stress values.

3. The method according to any of the previous claims, wherein activating (23) of engines further comprises adjusting the angular position of the parasite with respect to the carrier.

4. The method according to any of the previous claims, wherein the activating (23) of engines further comprises adjusting of the thrust of said engines.

5. A system for supporting maneuvers of an all-wing carrier aircraft by its parasite flying units, the system comprising:
- a memory with predetermined sensor values (25) corresponding to maneuvers;
- a controller (31) configured to:
- select (20) a maneuver to be performed;
- determine (21) sensor values (25) corresponding to selected maneuver by retrieving the sensor values (25) from the memory;
- select (22) engines of parasites to support the maneuver;
- activate (23) said engines in a control loop so that measured sensor values (25) are matched with the sensor values retrieved from the memory for the selected maneuver.

## Patentansprüche

1. Verfahren zum Unterstützen von Manövern eines Nurflügel-Trägerflugzeugs durch seine Drohnen-Flugeinheiten, **dadurch gekennzeichnet, dass** es die Schritte umfasst:
- Bereitstellen eines Speichers mit vorbestimmten Fühlerwerten (25), die Manövern entsprechen;
- Auswählen (20) eines auszuführenden Manövers;
- Bestimmen (21) von Fühlerwerten (25) entsprechend dem ausgewählten Manöver durch Abrufen der Fühlerwerte (25) aus dem Speicher;
- Auswählen (22) von Drohnenmotoren, um das Manöver zu unterstützen;
- Aktivieren (23) der Motoren in einem Regelungkreis, sodass gemessene Fühlerwerte (25) mit den aus dem Speicher für das ausgewählte Manöver abgerufenen Fühlerwerten abgestimmt werden.

2. Verfahren nach Anspruch 1, wobei die Fühlerwerte (25) Belastungswerte sind.

3. Verfahren nach einem der vorhergehenden Ansprüche, wobei das Aktivieren (23) von Motoren des Weiteren ein Einstellen der Winkelposition der Drohne in Bezug auf den Träger umfasst.

4. Verfahren nach einem der vorhergehenden Ansprüche, wobei das Aktivieren (23) von Motoren des Weiteren ein Einstellen der Schubkraft der Motoren umfasst.

5. System zum Unterstützen von Manövern eines Nurflügel-Trägerflugzeugs durch seine Drohnen-Flugeinheiten, wobei das System umfasst:
- einen Speicher mit vorbestimmten Fühlerwerten (25), die Manövern entsprechen;
- eine Steuerung (31), die konfiguriert wird:
- ein auszuführendes Manöver auszuwählen (20);
- Fühlerwerte (25) durch Abrufen der Fühlerwerte (25) aus dem Speicher zu bestimmen (21), die ausgewählten Manövern entsprechen;
- Drohnenmotoren auszuwählen (22), um das Manöver zu unterstützen;
- die Motoren in einem Regelungkreis zu aktivieren (23), sodass gemessene Fühlerwerte (25) mit den aus dem Speicher für das ausgewählte Manöver abgerufenen Fühlerwerten abgestimmt werden.

## Revendications

1. Procédé pour supporter des manoeuvres d'un transporteur toute voilure par ses unités volantes parasites, **caractérisé en ce qu'**il comprend les étapes de :
- fourniture d'une mémoire avec des valeurs de capteur prédéfinies (25) correspondant à des manoeuvres ;
- sélection (20) d'une manoeuvre à exécuter ;
- détermination (21) de valeurs de capteur (25) correspondant à la manoeuvre sélectionnée, par extraction de la mémoire des valeurs de capteur (25) ;
- sélection (22) de moteurs de parasites pour supporter la manoeuvre ;
- activation (23) desdits moteurs dans une boucle d'asservissement de sorte que les valeurs de capteur mesurées (25) soient mises en correspondance avec les valeurs de capteur extraites de la mémoire pour la manoeuvre sélectionnée.

2. Procédé selon la revendication 1, lesdites valeurs de capteur (25) étant des valeurs de contrainte.

3. Procédé selon l'une quelconque des revendications précédentes, ladite activation (23) des moteurs comprenant en outre le réglage de la position angulaire du parasite par rapport au transporteur.

4. Procédé selon l'une quelconque des revendications précédentes, ladite activation (23) des moteurs comprenant en outre le réglage de la poussée desdits moteurs.

5. Système pour supporter des manoeuvres d'un transporteur toute voilure par ses unités volantes parasites, le système comprenant :
- une mémoire avec des valeurs de capteur prédéfinies (25) correspondant à des manoeuvres ;
- un contrôleur (31) conçu pour :
- sélectionner (20) une manoeuvre à exécuter ;
- déterminer (21) des valeurs de capteur (25) correspondant à la manoeuvre sélectionnée par extraction de la mémoire des valeurs de capteur (25) ;
- sélectionner (22) des moteurs de parasites pour supporter la manoeuvre ;
- activer (23) lesdits moteurs dans une boucle d'asservissement de sorte que les valeurs de capteur mesurées (25) soient mises en correspondance avec les valeurs de capteur extraites de la mémoire pour la manoeuvre sélectionnée.
